# EUROPEAN PATENT APPLICATION

(11) **EP 3 487 090 A1**
(43) Date of publication of application: **22.05.2019**
(21) Application number: 16910183.9
(22) Date of filing: 29.07.2016
(51) Int. Cl.: H04B 7/26

(54) **USER EQUIPMENT (UE) AND CHANNEL QUALITY MEASUREMENT METHOD**

(71) Applicant: Huawei Technologies Co., Ltd., Longgang District Shenzhen, Guangdong 518129 (CN)
(72) Inventor: GAO, Quanzhong, Shenzhen Guangdong 518129 (CN); XU, Heng, Shenzhen Guangdong 518129 (CN); ZHAO, Jing, Shenzhen Guangdong 518129 (CN); YE, Zhipeng, Shenzhen Guangdong 518129 (CN)
(74) Representative: Gill Jennings & Every LLP
(86) International application number: PCT/CN2016/092255
(87) International publication number: WO 2018/018603

(57) **Abstract**

Embodiments of the present invention provide user equipment UE and a channel quality measurement method, and relate to the field of multi-antenna technologies. The UE includes a baseband chip, at least two transmit antennas, and a controller electrically connected to the at least two transmit antennas. The controller is configured to obtain a signal sending policy, where the signal sending policy is a policy pre-agreed on by the UE and a base station, and the signal sending policy includes sending sounding reference signals SRSs to the base station in a preset order by using n transmit antennas of the at least two transmit antennas; the controller is further configured to sequentially select, in the preset order, the n transmit antennas from the at least two transmit antennas; the baseband chip is configured to sequentially send the SRS signals to the base station by using the n transmit antennas selected by the controller, so that the base station performs channel quality measurement based on the received SRS signals. This resolves a problem in the prior art that each transmit antenna has relatively low transmit power because a plurality of transmit antennas of the UE send SRS signals in parallel.

## Description

### TECHNICAL FIELD

Embodiments of the present invention relate to the field of multi-antenna technologies, and in particular, to user equipment UE and a channel quality measurement method.

### BACKGROUND

In a time division duplex (Time Division Duplexing, TDD) system, there is reciprocity between an uplink channel and a downlink channel. Therefore, user equipment (User Equipment, UE) may send a sounding reference signal (Sounding Reference Signal, SRS) to a base station, so that the base station accurately measures uplink channel quality, and further obtains accurate downlink channel quality.

A multi-antenna technology is a key technology in response to a growth of wireless data services, and has been widely applied to UEs. In the prior art, when UE includes at least two transmit antennas, for measuring channel quality corresponding to each transmit antenna, an existing channel quality measurement method is as follows: A baseband chip transmits SRS signals to a base station in parallel by using all transmit antennas of the UE, and the base station calculates, based on the received SRS signals, uplink channel quality corresponding to each transmit antenna.

In a process of implementing the present invention, the inventor finds that the method has at least the following problem:

In the method, each transmit antenna has relatively low transmit power because the UE transmits the SRS signals in parallel by using all transmit antennas and total transmit power of the UE is fixed.

### SUMMARY

Embodiments of the present invention provide user equipment UE and a channel quality measurement method, to resolve a problem in the prior art that each transmit antenna has relatively low transmit power. The technical solutions are as follows.

According to a first aspect, UE is provided, and the UE includes a baseband chip, at least two transmit antennas, and a controller electrically connected to the at least two transmit antennas, where
the controller is configured to obtain a signal sending policy, where the signal sending policy is a policy pre-agreed on by the UE and a base station, and the signal sending policy includes sending sounding reference signals SRSs to the base station in a preset order by using n transmit antennas of the at least two transmit antennas, where n is an integer greater than or equal to 1; and
the controller is further configured to sequentially select, in the preset order, the n transmit antennas from the at least two transmit antennas; and
the baseband chip is configured to sequentially send the SRS signals to the base station by using the n transmit antennas selected by the controller, so that the base station performs channel quality measurement based on the received SRS signals.

The controller electrically connected to the at least two transmit antennas is configured in the UE, and the controller sequentially selects the n transmit antennas from the at least two transmit antennas, so that the baseband chip may sequentially send the SRS signals to the base station by using each of the n transmit antennas selected by the controller. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

In the first aspect, the controller may obtain the signal sending policy by using the following four possible obtaining manners. Specifically:

In a first possible implementation, the controller is further configured to obtain a locally preset signal sending policy.

In a second possible implementation, the controller is further configured to: receive index information sent by the base station, and query for, based on a preset correspondence, a signal sending policy corresponding to the index information, where the preset correspondence is a correspondence pre-agreed on by the UE and the base station.

The index information sent by the base station is received, and the signal sending policy corresponding to the index information is queried for based on the preset correspondence. This reduces resources to be consumed for interaction between the base station and the UE.

In a third possible implementation, the controller is further configured to:
receive a quantity of repetition times of each of the n transmit antennas sent by the base station; and
determine, based on the preset order of the n transmit antennas and the quantity of repetition times, a policy in which each transmit antenna is subject to the order and subject to the quantity of repetition times corresponding to the transmit antenna, as the signal sending policy, where the order of the n transmit antennas is an order pre-agreed on by the UE and the base station.

In a fourth possible implementation, the controller is electrically connected to the baseband chip, and the controller is further configured to:
obtain an output signal of the baseband chip, where the output signal is a binary sequence;
perform conversion between high and low levels in the output signal to obtain m - 1 signals, where m is a minimum integer greater than or equal to log₂ *n* ;
determine an order in an m-bit binary number in a sounding period in the m signals as a transmit antenna order corresponding to the binary number; and
determine a policy of sending an SRS signal in the order as the signal sending policy.

According to a second aspect, a channel quality measurement method is provided, the method is applied to the UE in the first aspect, and the method includes:
obtaining, by the controller, a signal sending policy, where the signal sending policy is a policy pre-agreed on by the UE and a base station, and the signal sending policy includes sending sounding reference signals SRSs to the base station in a preset order by using n transmit antennas of at least two transmit antennas, where n is an integer greater than or equal to 1;
sequentially selecting, by the controller in the preset order, the n transmit antennas from the at least two transmit antennas; and
sequentially sending, by the baseband chip, the SRS signals to the base station by using the n transmit antennas selected by the controller, so that the base station performs channel quality measurement based on the received SRS signals.

The controller electrically connected to the at least two transmit antennas is configured in the UE, and the controller sequentially selects the n transmit antennas from the at least two transmit antennas, so that the baseband chip may sequentially send the SRS signals to the base station by using each of the n transmit antennas selected by the controller. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

In the second aspect, an obtaining manner in which the controller obtains the signal sending policy may include the following four possible implementations. Specifically:

In a first possible implementation, the controller obtains a locally preset signal sending policy.

In a second possible implementation, the controller receives index information sent by the base station; and
that the controller obtains a locally preset signal sending policy includes:
querying for, based on a preset correspondence, a signal sending policy corresponding to the index information, where the preset correspondence is a correspondence pre-agreed on by the UE and the base station.

In a third possible implementation, the controller receives a quantity of repetition times of each of the n transmit antennas sent by the base station; and
determines, based on the preset order of the n transmit antennas and the quantity of repetition times, a policy in which each transmit antenna is subject to the order and subject to the quantity of repetition times corresponding to the transmit antenna, as the signal sending policy, where the order of the n transmit antennas is an order pre-agreed on by the UE and the base station.

In a fourth possible implementation, the controller obtains an output signal of the baseband chip, where the output signal is a binary sequence;
performs conversion between high and low levels in the output signal to obtain m - 1 signals, where m is a minimum integer greater than or equal to log₂ *n* ;
determines an order in an m-bit binary number in a sounding period in the m signals as a transmit antenna order corresponding to the binary number; and
determines a policy of sending an SRS signal in the order as the signal sending policy.

According to a third aspect, a channel quality measurement apparatus is provided, and the channel quality measurement apparatus includes an obtaining unit, a selection unit, and a sending unit, where
the obtaining unit is configured to obtain a signal sending policy, where the signal sending policy is a policy pre-agreed on by the UE and a base station, and the signal sending policy includes sending sounding reference signals SRSs to the base station in a preset order by using n transmit antennas of at least two transmit antennas, where n is an integer greater than or equal to 1;
the selection unit is configured to sequentially select, in the preset order, the n transmit antennas from the at least two transmit antennas; and
the sending unit is configured to sequentially send the SRS signals to the base station by using the n selected transmit antennas, so that the base station performs channel quality measurement based on the received SRS signals.

The signal sending policy is obtained, and the n transmit antennas are sequentially selected from the at least two transmit antenna based on the signal sending policy, so that the SRS signals are sequentially sent to the base station by using each of the n selected transmit antennas. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

Optionally, the obtaining unit, the selection unit, and the sending unit are further configured to implement the channel quality measurement method in the optional implementations of the second aspect. Details are not described herein.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1A and FIG. 1B are schematic structural diagrams of UE according to an embodiment of the present invention;
FIG. 1C is a performance simulation diagram of UE according to an embodiment of the present invention;
FIG. 2 is a flowchart of a channel quality measurement method according to an embodiment of the present invention; and
FIG. 3 is a schematic structural diagram of a channel quality measurement apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

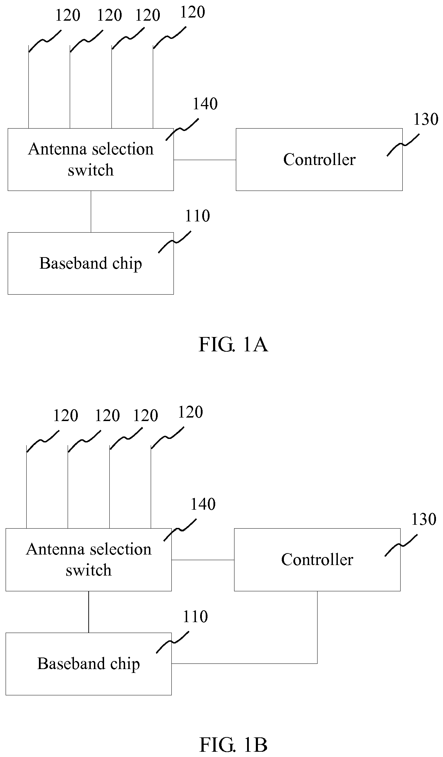

Referring to FIG. 1A, FIG. 1A is a schematic structural diagram of UE according to an embodiment of the present invention. As shown in FIG. 1A, the UE includes a baseband chip 110, at least two transmit antennas 120 (four transmit antennas 120 are used as an example in FIG. 1A), and a controller 130 electrically connected to the at least two transmit antennas 120.

The controller 130 is configured to obtain a signal sending policy, where the signal sending policy is a policy pre-agreed on by the UE and a base station, and the signal sending policy includes sending SRS signals to the base station in a preset order by using n transmit antennas of the at least two transmit antennas 120, where n is an integer greater than or equal to 1. In practice, the controller 130 may be implemented as a counter. This is not limited in this embodiment.

The controller 130 is further configured to sequentially select, in the preset order, the n transmit antennas from the at least two transmit antennas 120.

The baseband chip 110 is configured to sequentially send the SRS signals to the base station by using the n transmit antennas selected by the controller 130, so that the base station performs channel quality measurement based on the received SRS signals.

Optionally, the baseband chip 110 may send the SRS signals to the base station on different uplink symbols by using the transmit antennas currently selected by the controller 130. For example, the signal sending policy is sending the SRS signals to the base station by an ant 0, an ant 2, and an ant 3 sequentially. When the controller 130 selects the ant 0, the baseband chip 110 sends an SRS signal to the base station by using the ant 0; when the controller 130 selects the ant 2, the baseband chip 110 sends an SRS signal to the base station by using the ant 2; and when the controller 130 selects the ant 3, the baseband chip 110 sends an SRS signal to the base station by using the ant 3.

In actual implementation, referring to FIG. 1A, the UE may further include an antenna selection switch 140 that is connected to the baseband chip 110, the transmit antennas 120, and the controller 130. The controller 130 controls the antenna selection switch 140 to connect to a transmit antenna that needs to be selected from the at least two transmit antennas 120. For example, when the controller 130 needs to select the ant 0, the controller 130 controls the antenna selection switch 140 to connect to the ant 0. In this way, the baseband chip 110 can send the SRS signal to the base station by using the connected ant 0.

After receiving, at different moments, the SRS signals that are sent by the baseband chip 110 by using the transmit antennas, the base station can calculate, based on the received SRS signals, uplink signal quality information corresponding to the transmit antennas.

To sum up, according to the UE in this embodiment, the controller electrically connected to the at least two transmit antennas is configured in the UE, and the controller sequentially selects the n transmit antennas from the at least two transmit antennas, so that the baseband chip can sequentially send the SRS signals to the base station by using each of the n transmit antennas selected by the controller. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

In an example of the foregoing embodiment, the controller 130 may obtain the signal sending policy in the following obtaining manners.

### Manner 1:

The controller 130 is further configured to obtain a locally preset signal sending policy.

Specifically, the UE may store the signal sending policy pre-agreed on with the base station, and in this case, the controller 130 in the UE may directly obtain the locally stored signal sending policy.

For example, the UE may store a signal sending policy shown in Table 1. Correspondingly, the controller 130 may obtain the signal sending policy shown in Table 1.

**Table 1**

| | | | | |
|---|---|---|---|---|
| **Order** | 1 | 2 | 3 | 4 |
| **Transmit antenna** | ant0 | ant2 | ant1 | ant3 |

Table 1 shows an order in only one period, and in actual implementation, there may be a plurality of periods. In the signal sending policy shown in Table 1, four transmit antennas of the UE are used as an example. In actual implementation, only some of the transmit antennas of the UE may be included in the signal sending policy. For example, referring to Table 2, Table 2 shows another possible signal sending policy.

**Table 2**

| | | | |
|---|---|---|---|
| **Order** | 1 | 2 | 3 |
| **Transmit antenna** | ant0 | ant2 | ant1 |

### Manner 2:

The UE may pre-agree on a plurality of signal sending policies with the base station, and when channel quality measurement needs to be performed, the base station sends one of the plurality of signal sending policies to the UE. Specifically, the UE and the base station may store a preset correspondence, and the preset correspondence includes a correspondence between index information and a signal sending policy. When channel quality measurement needs to be performed, the base station sends, to the UE, index information corresponding to a signal sending policy that is sent this time, and the controller 130 in the UE receives the index information, and queries for, based on the stored preset correspondence, the signal sending policy corresponding to the index information.

In an example, if the preset correspondence pre-agreed on by the UE and the base station is shown in Table 3, when the base station sends index information 2 to the UE, the controller 130 may learn, based on the stored preset correspondence, that a signal sending policy used this time is a policy 3.

**Table 3**

| | | | | |
|---|---|---|---|---|
| **Index information** | 0 | 1 | 2 | 3 |
| **Signal sending policy** | Policy 1 | Policy 2 | Policy 3 | Policy 4 |

Details of the policy 1, the policy 2, the policy 3, and the policy 4 in Table 3 are as follows.

**Policy 1:**

| | | | | | |
|---|---|---|---|---|---|
| **Order** | 1 | 2 | 3 | 4 | 5 |
| **Transmit antenna** | ant0 | ant1 | ant2 | ant3 | ant0 |

**Policy 2:**

| | | | | | |
|---|---|---|---|---|---|
| **Order** | 1 | 2 | 3 | 4 | 5 |
| **Transmit antenna** | ant0 | ant2 | ant1 | ant2 | ant0 |

**Policy 3:**

| | | | | | |
|---|---|---|---|---|---|
| **Order** | 1 | 2 | 3 | 4 | 5 |
| **Transmit antenna** | ant1 | ant3 | ant2 | ant0 | ant1 |

**Policy 4:**

| | | | | | | | | |
|---|---|---|---|---|---|---|---|---|
| **Order** | 1 | 2 | 3 | 4 | 5 | 6 | 7 | 8 |
| **Transmit antenna** | ant0 | ant0 | ant1 | ant1 | ant2 | ant2 | ant3 | ant3 |

### Manner 3:

The UE may store a transmit antenna order pre-agreed on with the base station, and when channel quality measurement needs to be performed, the base station may send a quantity of repetition times of each transmit antenna. Correspondingly, the UE may receive the quantity of repetition times of each transmit antenna sent by the base station, and after receiving the quantity of repetition times, the controller 130 in the UE may determine a policy in which each transmit antenna is subject to the pre-agreed order and subject to a quantity of repetition times corresponding to the transmit antenna as the signal sending policy. The base station may configure a same quantity of repetition times or different quantities of repetition times for different transmit antennas. This is not limited in this embodiment.

For example, the base station configures a same quantity of repetition times for each transmit antenna and the transmit antenna order pre-agreed on by the UE and the base station is the order shown in Table 1. When the quantity of repetition times configured by the base station is 2, a signal sending policy obtained by the controller 130 is shown in Table 4.

**Table 4**

| | | | | | | | | |
|---|---|---|---|---|---|---|---|---|
| **Order** | 1 | 2 | 3 | 4 | 5 | 6 | 7 | 8 |
| **Transmit antenna** | ant0 | ant0 | ant2 | ant2 | ant1 | ant1 | ant3 | ant3 |

It should be noted that, that the base station configures a same quantity of repetition times for each transmit antenna is used merely as an example above. Optionally, the base station may configure a different quantity of repetition times for each transmit antenna.

In this case, in a possible implementation, the base station may directly send the quantity of repetition times of each transmit antenna to the UE. For example, the base station sends 2, 1, 3, and 1 to the UE, and after the UE receives the quantity of repetition times of each transmit antenna, the controller 130 may learn that a quantity of repetition times of the ant 0 is 2, a quantity of repetition times of the ant 2 is 1, a quantity of repetition times of the ant 1 is 3, and a quantity of repetition times of the ant 3 is 1. In other words, the controller 130 may obtain a signal sending policy shown in Table 5.

**Table 5**

| | | | | | | | |
|---|---|---|---|---|---|---|---|
| **Order** | 1 | 2 | 3 | 4 | 5 | 6 | 7 |
| **Transmit antenna** | ant0 | ant0 | ant2 | ant1 | ant1 | ant1 | ant3 |

In another possible implementation, the base station and the UE may pre-agree on a correspondence between an index and a repetition configuration. The base station sends an index to the UE, and the controller 130 in the UE queries for, based on the stored correspondence, a repetition configuration corresponding to the index. In this way, the controller 130 can obtain a signal sending policy.

For example, repetition configurations agreed on by the base station and the UE are shown in Table 6. When the base station sends an index 3 to the UE, the UE can obtain a signal sending policy shown in Table 7.

**Table 6**

| | | | | |
|---|---|---|---|---|
| **Index** | 1 | 2 | 3 | 4 |
| **Repetition configuration** | Repetition configuration 1 | Repetition configuration 2 | Repetition configuration 3 | Repetition configuration 4 |

In Table 6, the repetition configuration 1 is one time for an ant 0, two times for an ant 2, one time for an ant 1, and three times for an ant 3; the repetition configuration 2 is two times for the ant 0, one time for the ant 2, three times for the ant 1, and two times for the ant 3; the repetition configuration 3 is one time for the ant 0, three times for the ant 2, two times for the ant 1, and one time for the ant 3; and the repetition configuration 4 is three times for the ant 0, one time for the ant 2, two times for the ant 1, and one time for the ant 3.

**Table 7**

| | | | | | | | |
|---|---|---|---|---|---|---|---|
| **Order** | 1 | 2 | 3 | 4 | 5 | 6 | 7 |
| **Transmit antenna** | ant0 | ant2 | ant2 | ant2 | ant1 | ant1 | ant3 |

### Manner 4:

Referring to FIG. 1B, the controller 130 may be electrically connected to the baseband chip 110. For this case, the controller 130 may obtain the signal sending policy in the following manner.
1: Obtain an output signal of the baseband chip 110, where the output signal is a binary sequence.

The controller 130 may obtain the output signal of the baseband chip 110 connected to the controller 130 from the baseband chip 110.

For example, the output signal obtained by the controller 130 is: 00000 00000 00001 00001 00000 00000 00001 00001 00000 00000 00001 00001.

2: Perform conversion between high and low levels in the output signal to obtain m - 1 signals, where m is a minimum integer greater than or equal to log₂ *n*.

For example, assuming that n = 4, the controller 130 may perform conversion between the high and low levels in the output signal to obtain one signal. For another example, assuming that n = 6, the controller 130 may perform conversion between the high and low levels in the output signal to obtain two signals.

In actual implementation, the controller 130 may perform conversion between high and low levels in a sounding (sounding) period in the output signal to obtain m - 1 signals. An m-bit binary number in the sounding period of m signals that consist of the m - 1 signals obtained through conversion and the output signal may be used to identify each of the n transmit antennas.

For example, assuming that n = 4, the controller 130 may convert a low level at a T1 + (4 x N + 1) x t moment in the output signal into a high level, convert a high level at a T1 + (4 x N + 4) x t moment in the output signal into a low level, and keep a level at another moment unchanged. T1 is a moment at which a first high level is generated in the output signal, t = T/2, T is a time difference between two high levels in the output signal, and N has a starting value 0. For example, a signal obtained by the controller 130 through conversion is 00000 00001 00000 00001 00000 00001 00000 00001 00000 00001 00000 00001.

For another example, assuming that n = 8, the controller 130 may convert low levels at a T1 + (8 x N + 1) x t moment and a T1 + (8 x N + 5) x t moment into high levels, convert high levels at a T1 + (8 x N + 4) x t moment and a T1 + (8 x N + 8) x t moment into low levels, and keep a high or low level at another moment unchanged, and use a signal obtained through conversion as a second signal. The controller 130 may convert high levels at a T1 + (8 x N + 2) x t moment and a T1 + (8 x N + 4) x t moment into low levels, convert low levels at a T1 + (8 x N + 5) x t moment and a T1 + (8 x N + 7) x t moment into high levels, and keep a high or low level at another moment in the output signal unchanged, and use a signal obtained through conversion as a third signal. T1 is a moment at which a first high level is generated in the output signal, t = T/2, T is a time difference between two high levels in the output signal, and N has a starting value 0. For example, the second signal obtained by the controller 130 through conversion is 00000 00000 00001 00001 00000 00000 00001 00001 00000 00000, and the third signal obtained by the controller 130 through conversion is 00000 00001 00000 00001 00000 00001 00000 00001 00000 00001.

For another example, also assuming that n = 8, the controller 130 may convert low levels at a T1 + (8 x N + 1) x t moment and a T1 + (8 x N + 5) x t moment into high levels, convert high levels at a T1 + (8 x N + 4) x t moment and a T1 + (8 x N + 8) x t moment into low levels, and keep a high or low level at another moment unchanged, and use a signal obtained through conversion as a second signal. The controller 130 may convert high levels at a T1 + (8 x N + 1) x t moment and a T1 + (8 x N + 3) x t moment into low levels, convert low levels at a T1 + (8 x N + 6) x t moment and a T1 + (8 x N + 8) x t moment into high levels, and keep a high or low level at another moment in the output signal unchanged, and use a signal obtained through conversion as a third signal.

3: Determine an order in an m-bit binary number in a sounding period in the m signals as a transmit antenna order corresponding to the binary number.

For example, assuming that n = 4, two signals obtained by the controller 130 are as follows.

| | | | | | | | | | | | | | | | | | | | |
|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 1 | 0 | 0 | 0 | 0 | 1 |
| 0 | 0 | 0 | 0 | 0 | 0 | 0 | 0 | 0 | 1 | 0 | 0 | 0 | 0 | 0 | 0 | 0 | 0 | 0 | 1 |
| | | | | ant0 | | | | | ant1 | | | | | ant2 | | | | | ant3 |

The foregoing table lists only partial content of the two signals. In actual implementation, each signal may further include other content described above. This is not limited in this embodiment.

It may be learned from the foregoing table that the transmit antenna order is ant 0, ant 0, ant 1, and ant 2.

4: Determine a policy of sending an SRS in the order as the signal sending policy.

The controller determines the policy of sending an SRS signal based on the determined order as the signal sending policy. To be specific, the controller determines that the obtained signal sending policy is sending SRS signals by using the ant 0, the ant 0, the ant 1, and the ant 2 sequentially. This is not limited in this embodiment.

First, it should additionally be noted that in the foregoing embodiment, that the controller 130 obtains the signal sending policy in the foregoing several obtaining manners is used merely as an example for description. Optionally, the base station may directly send the signal sending policy to the UE. Correspondingly, the controller 130 in the UE obtains the signal sending policy sent by the base station. This is not limited in this embodiment.

Second, it should additionally be noted that after calculating the uplink channel quality based on the received SRS signals, the base station can calculate, based on the SRS signals sent by using the transmit antennas, channel quality information corresponding to the transmit antennas. In other words, the base station may obtain channel quality information corresponding to the n transmit antennas. Then, the base station may calculate a beamforming (Beamforming, BF) weight or pre-coding weight of the UE based on the n pieces of channel quality information. Specifically, assuming that a total quantity of transmit antennas of the UE is m, when n = m, the base station may calculate, based on the n pieces of channel quality information, that is, full-dimensional channel quality information, the BF weight or the precoding weight; or when n<m, the base station may first estimate, based on the n pieces of channel quality information, channel quality information corresponding to a remaining transmit antenna, and then calculate, based on m - n pieces of channel quality information obtained through estimation and the n pieces of channel quality information, the BF weight or the precoding weight. Because the base station may obtain n-dimensional channel quality information and n may be an integer greater than 1, the BF weight or the precoding weight obtained by the base station based on the n-dimensional channel quality information is highly accurate, thereby improving performance of the UE.

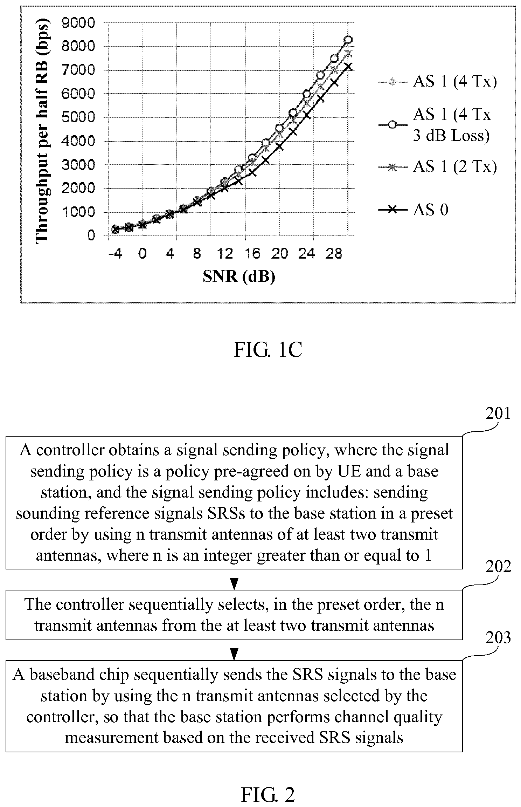

Referring to FIG. 1C, FIG. 1C is a simulation diagram of UE that does not include a controller (AS 0), or includes a controller and two transmit antennas (AS 1 (2 Tx)), or includes a controller and four transmit antennas with a 3 dB insertion loss (AS 1 (4 Tx 3 dB loss)), or includes a controller and four transmit antennas with no insertion loss (AS 1 (4 Tx)). As shown in FIG. 1C, when the four transmit antennas have no insertion loss, there is a gain of 20% in the solution disclosed in this embodiment; or when the four transmit antennas have a 3 dB insertion loss, there is still a gain of 17% in the solution disclosed in this embodiment.

Third, it should be additionally noted that the UE may further include another part, for example, may further include a plurality of receive antennas and processors. A specific structure of the UE is not limited in this embodiment.

Fourth, it should be additionally noted that, in the foregoing embodiment, that the controller directly obtains the signal sending policy is used merely as an example. Optionally, when the UE includes a processor, the processor may obtain the signal sending policy in the foregoing obtaining manners, and the controller 130 may directly obtain the signal sending policy from the processor. A manner for obtaining the signal sending policy is not limited in this embodiment.

To sum up, according to the UE in this embodiment, the controller electrically connected to the at least two transmit antennas is configured in the UE, and the controller sequentially selects the n transmit antennas from the at least two transmit antennas, so that the baseband chip can sequentially send the SRS signals to the base station by using each of the n transmit antennas selected by the controller. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

Referring to FIG. 2, FIG. 2 is a flowchart of a channel quality measurement method according to an embodiment of the present invention. The channel quality measurement method may be applied to the UE shown in FIG. 1A, FIG. 1B, or FIG. 1C. As shown in FIG. 2, the channel quality measurement method includes the following steps:
Step 201: A controller obtains a signal sending policy, where the signal sending policy is a policy pre-agreed on by the UE and a base station, and the signal sending policy includes sending sounding reference signals SRSs to the base station in a preset order by using n transmit antennas of at least two transmit antennas, where n is an integer greater than or equal to 1.
Step 202: The controller sequentially selects, in the preset order, the n transmit antennas from at least the two transmit antennas.
Step 203: A baseband chip sequentially sends the SRS signals to the base station by using the n transmit antennas selected by the controller, so that the base station performs channel quality measurement based on the received SRS signals.

To sum up, according to the channel quality measurement method provided in this embodiment, the controller obtains the signal sending policy, and sequentially selects the n transmit antennas from the at least two transmit antennas based on the signal sending policy, so that the baseband chip sequentially sends the SRS signals to the base station by using each of the n transmit antennas selected by the controller. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

In the foregoing embodiment, the controller may obtain the signal sending policy in the following four obtaining manners:
Manner 1:
   The controller obtains a locally preset signal sending policy.
Manner 2:
   The controller receives index information sent by the base station; and
   queries for, based on a preset correspondence, a signal sending policy corresponding to the index information, where the preset correspondence is a correspondence pre-agreed on by the UE and the base station.
Manner 3:
   The controller receives a quantity of repetition times of each of the n transmit antennas sent by the base station; and
   determines, based on the preset order of the n transmit antennas and the quantity of repetition times, a policy in which each transmit antenna is subject to the order and subject to the quantity of repetition times corresponding to the transmit antenna, as the signal sending policy, where the order of the n transmit antennas is an order pre-agreed on by the UE and the base station.
Manner 4:
   The controller obtains an output signal of the baseband chip, where the output signal is a binary sequence;
   performs conversion between high and low levels in the output signal to obtain m - 1 signals, where m is a minimum integer greater than or equal to log₂ *n ;*
   determines an order in an m-bit binary number in a sounding period in the m signals as a transmit antenna order corresponding to the binary number; and
   determines a policy of sending an SRS signal in the order as the signal sending policy.

It should be noted that the four obtaining manners are similar to those in the foregoing embodiment. Details are not repeated in this embodiment.

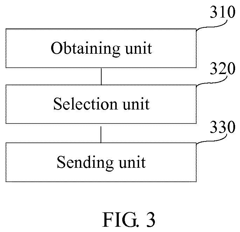

Referring to FIG. 3, FIG. 3 is a schematic structural diagram of a channel quality measurement apparatus according to an embodiment of the present invention. As shown in FIG. 3, the channel quality measurement apparatus may include an obtaining unit 310, a selection unit 320, and a sending unit 330.

The obtaining unit 310 is configured to obtain a signal sending policy, where the signal sending policy is a policy pre-agreed on by the UE and a base station, and the signal sending policy includes sending sounding reference signals SRSs to the base station in a preset order by using n transmit antennas of the at least two transmit antennas, where n is an integer greater than or equal to 1.

The selection unit 320 is configured to sequentially select, in the preset order, the n transmit antennas from the at least two transmit antennas.

The sending unit 330 is configured to sequentially send the SRS signals to the base station by using the n selected transmit antennas, so that the base station performs channel quality measurement based on the received SRS signals.

To sum up, the channel quality measurement apparatus provided in this embodiment obtains the signal sending policy, and sequentially selects the n transmit antennas from the at least two transmit antennas based on the signal sending policy, so that the SRS signals are sequentially sent to the base station by using each of the n selected transmit antennas. This resolves a problem in the prior art that each transmit antenna has relatively low transmit power because a plurality of transmit antennas of the UE send SRS signals in parallel. On a same uplink symbol, only one transmit antenna is used to send an SRS signal, thereby increasing the transmit power of each transmit antenna.

Optionally, the obtaining unit 310 is further configured to obtain a locally preset signal sending policy.

Optionally, the obtaining unit 310 is further configured to: receive index information sent by the base station, and query for, based on a preset correspondence, the signal sending policy corresponding to the index information, where the preset correspondence is a correspondence pre-agreed on by the UE and the base station.

Optionally, the obtaining unit 310 is further configured to: receive a quantity of repetition times of each of the n transmit antennas sent by the base station; and
determine, based on the preset order of the n transmit antennas and the quantity of repetition times, a policy in which each transmit antenna is subject to the order and subject to the quantity of repetition times corresponding to the transmit antenna, as the signal sending policy, where the order of the n transmit antennas is an order pre-agreed on by the UE and the base station.

Optionally, the obtaining unit 310 is further configured to: obtain an output signal sent by the baseband chip, where the output signal is a binary sequence;
perform conversion between high and low levels in the output signal to obtain m - 1 signals, where m is a minimum integer greater than or equal to log₂ *n ;*
determine an order in an m-bit binary number in a sounding period in the m signals as a transmit antenna order corresponding to the binary number; and
determine a policy of sending an SRS signal in the order as the signal sending policy.

It should be noted that the channel quality measurement apparatus provided in this embodiment may be applied to the UE shown in FIG. 1A or FIG. 1B, and implements the foregoing channel quality measurement method by using a controller and the baseband chip in the UE.

It should be noted that the terms "one" ("a", "an", "the") of singular forms used in this specification are also intended to include plural forms, unless exceptional cases are described clearly to be supported in the context. It should also be understood that "and/or" used in this specification is intended to include any possible implementation or all possible combinations of one or more of associated items that are listed.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely example embodiments of the present invention, but are not intended to limit the present invention. Any modification, equivalent replacement, and improvement made without departing from the spirit and principle of the present invention shall fall within the protection scope of the present invention.

## Claims

1. User equipment UE, wherein the UE comprises a baseband chip, at least two transmit antennas, and a controller electrically connected to the at least two transmit antennas, wherein
the controller is configured to obtain a signal sending policy, wherein the signal sending policy is a policy pre-agreed on by the UE and a base station, and the signal sending policy comprises sending sounding reference signals SRSs to the base station in a preset order by using n transmit antennas of the at least two transmit antennas, wherein n is an integer greater than or equal to 1;
the controller is further configured to sequentially select, in the preset order, the n transmit antennas from the at least two transmit antennas; and
the baseband chip is configured to sequentially send the SRS signals to the base station by using the n transmit antennas selected by the controller, so that the base station performs channel quality measurement based on the received SRS signals.

2. The UE according to claim 1, wherein
the controller is further configured to obtain the signal sending policy which is locally preset.

3. The UE according to claim 2, wherein
the controller is further configured to: receive index information sent by the base station, and query for, based on a preset correspondence, the signal sending policy corresponding to the index information, wherein the preset correspondence is a correspondence pre-agreed on by the UE and the base station.

4. The UE according to claim 1, wherein the controller is further configured to:
receive a quantity of repetition times, sent by the base station, of each of the n transmit antennas; and
determine, based on the preset order of the n transmit antennas and the quantity of repetition times, a policy in which each transmit antenna is subject to the order and subject to the quantity of repetition times corresponding to the transmit antenna, as the signal sending policy, wherein the order of the n transmit antennas is an order pre-agreed on by the UE and the base station.

5. The UE according to claim 1, wherein the controller is electrically connected to the baseband chip, and the controller is further configured to:
obtain an output signal of the baseband chip, wherein the output signal is a binary sequence;
perform conversion between high and low levels in the output signal to obtain m - 1 signals, wherein m is a minimum integer greater than or equal to log₂ n ;
determine an order in an m-bit binary number in a sounding period in the m signals as a transmit antenna order corresponding to the binary number; and
determine a policy of sending an SRS signal in the order as the signal sending policy.

6. A channel quality measurement method, used in user equipment UE, wherein the UE comprises a baseband chip, at least two transmit antennas, and a controller connected to the at least two transmit antennas, and the method comprises:
obtaining, by the controller, a signal sending policy, wherein the signal sending policy is a policy pre-agreed on by the UE and a base station, and the signal sending policy comprises sending sounding reference signals SRSs to the base station in a preset order by using n transmit antennas of the at least two transmit antennas, wherein n is an integer greater than or equal to 1;
sequentially selecting, by the controller in the preset order, the n transmit antennas from the at least two transmit antennas; and
sequentially sending, by the baseband chip, the SRS signals to the base station by using the n transmit antennas selected by the controller, so that the base station performs channel quality measurement based on the received SRS signals.

7. The method according to claim 6, wherein the obtaining, by the controller, a signal sending policy comprises:
obtaining, by the controller, the locally preset signal sending policy.

8. The method according to claim 7, wherein before the obtaining, by the controller, the locally preset signal sending policy, the method further comprises:
receiving index information sent by the base station; and
the obtaining, by the controller, the locally preset signal sending policy comprises:
querying for, based on a preset correspondence, the signal sending policy corresponding to the index information, wherein the preset correspondence is a correspondence pre-agreed on by the UE and the base station.

9. The method according to claim 6, wherein the obtaining, by the controller, a signal sending policy comprises:
receiving a quantity of repetition times, sent by the base station, of each of the n transmit antennas; and
determining, based on the preset order of the n transmit antennas and the quantity of repetition times, a policy in which each transmit antenna is subject to the order and subject to the quantity of repetition times corresponding to the transmit antenna, as the signal sending policy, wherein the order of the n transmit antennas is an order pre-agreed on by the UE and the base station.

10. The method according to claim 6, wherein the obtaining, by the controller, a signal sending policy comprises:
obtaining an output signal of the baseband chip, wherein the output signal is a binary sequence;
performing conversion between high and low levels in the output signal to obtain m - 1 signals, wherein m is a minimum integer greater than or equal to log₂ n ;
determining an order in an m-bit binary number in a sounding period in the m signals as a transmit antenna order corresponding to the binary number; and
determining a policy of sending an SRS signal in the order as the signal sending policy.
